# EUROPÄISCHE PATENTANMELDUNG

(11) **EP 1 584 818 A1**
(43) Veröffentlichungstag der Anmeldung: **12.10.2005**
(21) Anmeldenummer: 04450085.8
(22) Anmeldetag: 08.04.2004
(51) Int. Cl.: F03D 3/06

(54) **Wind- bzw. Wasserbetriebener Genrator / WW-Generator**

(71) Anmelder: Miltchev, Wassil, 5500 Lovech (BG)
(72) Erfinder: Miltchev, Wassil, 5500 Lovech (BG)

(57) **Zusammenfassung**

Der WW-Generator ist ein Mechanismus um Wind- bzw. Wasserströmungen einzufangen und deren Energie zu nutzen. Sich selbstverstellende, an einem vertikalen Zylinder, der um einer Achse bzw. Zylinderkern rotiert, für optimale Nutzung befestigte doppelseitige Leistungsblätter, die aus einer stromlinienförmige Fläche und einer Strömungsdruckfläche bestehen, setzen mit deren Bewegung den Zylinder in Drehbewegung. Das Leistungsblatt arbeitet effektiv in jeder Drehephase des rotierenden Kerns, obwohl die Hälfte seiner Bewegung gegen der Strömung ist. Das wird durch die Form des Leistungsblattes ermöglicht. Das Leistungsblatt besteht aus einer Strömungsdruckfläche und aus einer stromlinienförmigen Fläche, die sich wie ein Segel verhält (Fig.4). Die Kombination der beiden Flächen ergibt das Effekt der umströmten Tragfläche (Fig.5).

Der WW-Generator ist universell bezüglich seiner Leistung. Es ist eine Verwendung in unmittelbarer Nähe des Verbrauchers möglich, was auch urbanisierte Zonen inkludiert.

## Beschreibung

Die Erfindung betrifft einen Wind- bzw. Wasserbetriebenen Generator (WW-Generator), welcher sich durch herkömmliche insofern unterscheidet, dass die Leistungsblätter ihre Position selber verstellen.

Die Verstellung der Leistungsblätter gibt die Möglichkeit Energie von der Wind- bzw. Wasserströmung konstant zu produzieren, auch in den Drehephasen, wo die Leistungsblätter normalerweise Wiederstand leisten.

Dieser Effekt wird durch die Form des Leistungsblattes erreicht. Diese besteht aus zwei Oberflächen, eine stromlinienförmige Fläche und eine Strömungsdruckfläche.

Die Strömungsdruckfläche bildet mit dem sich drehenden Kern eine Kammer, welche auf Strömungsdruck reagiert.

Die stromlinienförmige Oberfläche verhält sich wie ein Segel und bildet mit dem Kern einen Strömungskanal, in welchem die Luft- bzw. Wasserströmung beschleunigt wird und wie eine umströmte Tragfläche.

Auf diese Weise arbeitet das Leistungsblatt effektiv in jeder Drehephase des rotierenden Kerns.

Das macht den WW-Generator effektiver als die bis jetzt bekannten.

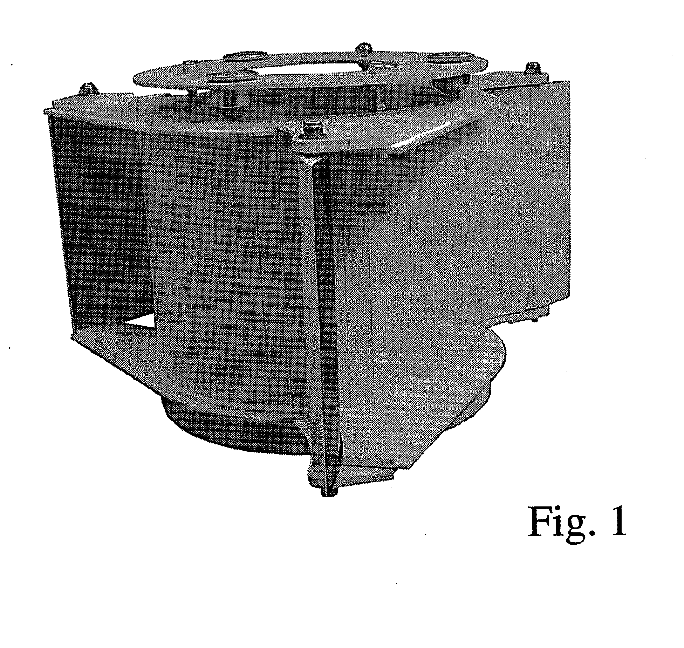

Auf Fig.1 ist ein funktionierendes Model des WW-Generators gezeigt.

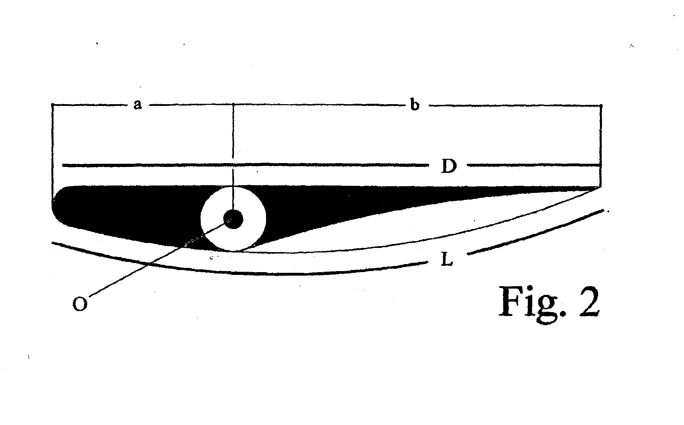

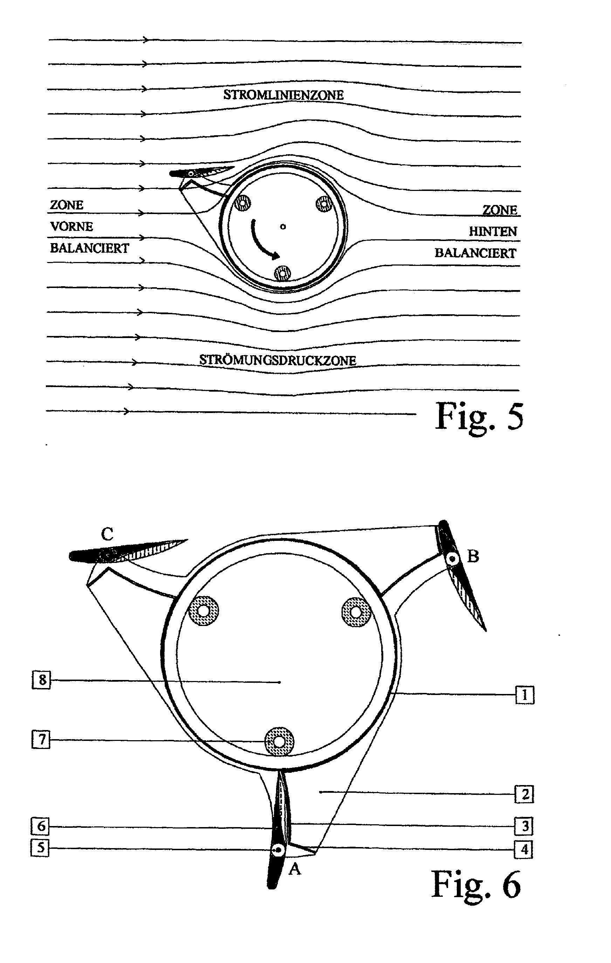

Der WW-Generator setzt sich wie folgt zusammen:
- Ein vertikaler Zylinder (Fig.6, 1) rotiert mit Hilfe der Wind- bzw. Wasserkraft um eine Tragkonstruktion (Energiegenerator) (Fig.6, 7) durch ein an ihn angebrachtes und sich selbstverstellendes Leistungsblatt (Fig.2 und Fig.6, 6) bzw. durch mehrere solche Leistungsblätter (Fig.6, A,B,C).
- Das Leistungsblatt (Fig.2 und Fig.6, 6), bestehend aus einer Strömungsdruckfläche (Fig.2, D) und einer stromlinienförmige Fläche (Fig.2, L) (einerseits Prinzip der Umströmung von Tragfläche und andererseits Wirkung wie ein Segel), welche an den Kanten miteinander verbunden sind, übertragt die Energie des Windes bzw. des Wassers an den Zylinder (Fig.6, 1).
- Die speziell an den Zylinder (Fig.6, 1) angebrachten Träger (Konsolen) (Fig.6, 2) sichern eine vertikale Achse (Fig.2, O und Fig.6, 5) für das Leistungsblatt (Fig.6, A,B,C) und bestimmen durch Schlitzen (Fig.6, 3 und Fig.6, 4) zwei Stoppositionen für die Drehbewegung des Leistungsblattes.
- Die senkrechte Achse (Fig.2, 0 und Fig.6, 5) des Leistungsblattes (Fig.2 und Fig.6, 6) ist asymmetrisch im Verhältnis a < b (Fig. 2) angeordnet, was die vorgesehene Bewegung (Rotation) des Leistungsblattes von der Strömung sicherstellt.

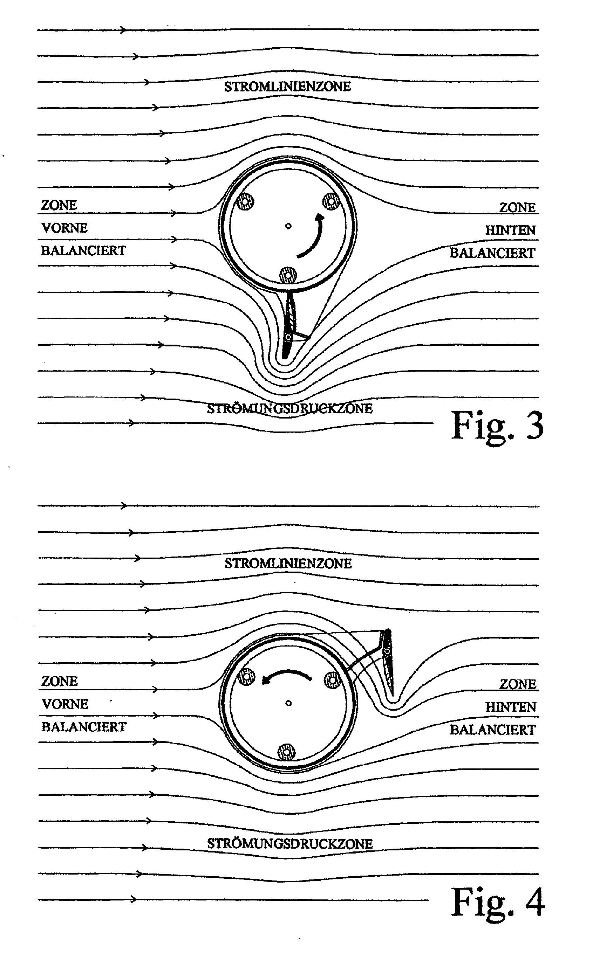

Die drei Schemen auf Fig.3 bis 5 verdeutlichen den Bewegungsablauf des WW-Generators bei einer idealen Strömung und mit einem Leistungsblatt.
- Position in der Strömungsdruckzone (Fig.3): Das Leistungsblatt ist in der Schlitze 3 (Fig. 6, 3) positioniert. Das Leistungsblatt und die Wand des Zylinders bilden eine Strömungsdruckkammer. Es folgt eine optimale Ausnutzung der Strömung und der Zylinder wird in Bewegung gesetzt.
- Position in der Stromlinienzone (Fig.4): Das Leistungsblatt orientiert sich mit der stromlinienförmige Fläche zur Strömung und positioniert sich in der Schlitze 4 (Fig. 6, 4). Die stromlinienförmige Fläche bildet mit dem Zylinder einen Strömungskanal, in welchem die Luft bzw. das Wasser verdichtet und beschleunigt wird. Das Leistungsblatt verhält sich wie ein Segel. Dieser Prozess bewegt das Leistungsblatt diagonal zur Strömung. Der Zylinder wird in Bewegung versetzt.
- Position vorne balanciert (Fig.5): Das Leistungsblatt orientiert sich parallel zur Strömung, ist von den Schlitzen frei und verhält sie wie eine umströmte Tragfläche. Es wird eine Verschiebung des Leistungsblattes von der Strömungsdruckfläche zur stromlinienförmigen Fläche verursacht. Der Zylinder wird in Bewegung gesetzt. Es folgt eine Drehung und Positionierung wie in der ersten Position (Fig.3).

Abhängig von der Leistung sowie vom Verhältnis *Durchmesser Zylinderkem (Fig.6, 8) : horizontale Länge a+b (Fig. 2) des Leistungsblattes* kann die Anzahl der Leistungsblätter variieren.

Der WW-Generator (Fig.1) reagiert auf die Luft- und Wasserströmungen gleich, wobei deren Richtung nicht relevant ist.

Die Drehrichtung des Zylinders wird durch die Justierung der Leistungsblätter bestimmt und bleibt konstant.

Der WW-Generator ist universell bezüglich der Leistung. Es sind sowohl Mini-Varianten (Energieversorgung von kleinen Verbrauchern) als auch Varianten für industriell genutzte Energieverbrauchern möglich.

Der WW-Generator kann wie folgt verwendet werden:
Direkt: Betreiben von Pumpen, Hebevorrichtungen, Mühlen, Wassertürme, Ventilationssysteme, Attraktionen, etc.
Indirekt: Erzeugung von elektrischer Energie

Durch die rotierende Bewegung des Zylinders und dessen Weitergabe an einen Stromgenerator, verwandelt sich das System in ein Kraftwerk.

In der Variante für hohe Energieerzeugung gibt es keine zentrale Achse im Kern (Fig.6, 8), was Möglichkeiten für die Unterbringung div. Räumlichkeiten bietet (Hallen, Lager, Sporträume, etc.)

## Patentansprüche

1. Wind- bzw. Wasserbetriebenen Generator (WW-Generator) um Luft- und Wasserströmungen einzufangen und deren Energie zu nutzen mittels sich selbstverstellende, an einem vertikalen Zylinder bzw. horizontalem Torus oder deren Äquivalenten, der um eine Achse bzw. Tragkonstruktion bzw. Zylinderkern rotiert, für optimale Nutzung befestigte doppelseitige Leistungsblätter, die aus einer stromlinienförmige Fläche und einer Strömungsdruckfläche bestehen, und mit deren Bewegung den Zylinder in Drehebewegung setzen, wodurch diese Drehebewegung in Leistung umgewandelt wird, **dadurch gekennzeichnet, dass** der WW-Generator von den Wind- bzw. Wasserströmungen mittels sich selbstverstellende Leistungsblätter berieben wird, welche die Strömungsenergie in jeder Drehephase des rotierenden Kerns effektiv ausnutzen.

2. Sich selbstverstellendes Leistungsblatt, asymmetrisch an einer senkrechten Achse befestigt, welche die von der Wind- bzw. Wasserströmung provozierte Bewegung des Leistungsblattes sichert bis das Leistungsblatt in einer der zwei Schlitzen eine Stoppositionen für seine Drehbewegung findet, welches die Energie des Windes bzw. des Wassers an den Zylinder bzw. horizontalem Torus oder deren Äquivalenten überträgt und welches mit seiner Strömungsdruckfläche und der Zylinder in der Strömungsdruckzone eine Strömungsdruckkammer bildet, mit seiner stromlinienförmigen Fläche und der Zylinder in der Stromlinienzone sich wie ein Segel verhält und in seiner vorne balancierter Position mit den beiden Flächen sich wie eine umströmte Tragfläche verhält, **dadurch gekennzeichnet, dass** das Leistungsblatt aus zwei verschiedener an den Kanten miteinander verbunden Flächen besteht, eine stromlinienförmige Fläche und eine Strömungsdruckfläche.

3. Verwendung des Torus- bzw. Zylinderkerns des WW-Generator nach Anspruch 1 und 2 zur Unterbringung div. Räumlichkeiten wie Hallen, Lager, Sporträume, etc.

4. Der WW-Generator nach Anspruch 1 bis 3 betreibt bei der direkten Verwendung der Wind- bzw. Wasserenergie Pumpen, Hebevorrichtungen, Ventilationssysteme, etc, und die Kombinationen Wasserturm - WW-Generator, Mühle - WW-Generator, Getreidespeicher - WW-Generator, etc. in der Praxis umsetzbar sind.

5. Der WW-Generator nach Anspruch 1 bis 4 betreibt bei der indirekten Verwendung der Wind- bzw. Wasserenergie einen Stromgenerator, **dadurch gekennzeichnet, dass** der durch die Wind- bzw. Wasserströmung betriebene mittels sich selbstverstellenden Leistungsblätter in Drehbewegung gesetzte vertikale Zylinder bzw. horizontale Torus oder deren Äquivalenten seine Drehbewegung einem Stromgenerator weitergibt und **dadurch** ein System bildet, das sich in ein WW-Generator betriebene Kraftwerk verwandelt oder ein System, wo der Zylinder selber die Rolle eines Rotors spielt, der sich um das Kern (den Stator) dreht.

6. Der WW-Generator nach Anspruch 1 bis 5 lässt sich in einem Kraftfahrzeug einbauen, **dadurch gekennzeichnet, dass** der in einem Kraftfahrzeug eingebaute WW-Generator die Luftwiederstandskraft, die sich von der Bewegung des Kraftfahrzeugs ergibt, in Energie umwandelt, diese Energie an das Kraftfahrzeugs überträgt und damit das Kraftfahrzeugs betreibt.
